# EUROPÄISCHE PATENTANMELDUNG

(11) **EP 3 957 883 A1**
(43) Veröffentlichungstag der Anmeldung: **23.02.2022**
(21) Anmeldenummer: 20191885.1
(22) Anmeldetag: 20.08.2020
(51) Int. Cl.: F16K 1/42, F16K 17/04, F16K 37/00

(54) **VERFAHREN UND VORRICHTUNG ZUM EINSTELLEN EINER FEDERVORSPANNUNG AN EINEM ÜBERDRUCKVENTIL**

(71) Anmelder: Sonplas GmbH, 94315 Straubing (DE)
(72) Erfinder: ROHRMEIER, Andreas, 94342 Straßkirchen (DE); FRANKL, Herbert, 94315 Straubing (DE)
(74) Vertreter: Wunderlich & Heim Patentanwälte Partnerschaftsgesellschaft mbB

(57) **Zusammenfassung**

Die Erfindung betrifft ein Verfahren zum Einstellen einer Federvorspannung an einem Überdruckventil, welches eine Druckfeder, einen Ventilsitz und einen Federsitz aufweist, welche in einem Gehäuse angeordnet sind. Hierbei ist einer der beiden Sitze fest im Gehäuse angeordnet und mittels der Position des anderen Sitzes wird die Federvorspannung eingestellt. Die Erfindung ist dadurch gekennzeichnet, dass die Position des anderen Sitzes mittels einer Presspassung eingestellt wird, wobei die Presspassung durch Aufbringen eines Kraftverlaufes hergestellt wird. Hierbei wird der Kraftverlauf zumindest teilweise durch eine Vielzahl von kontrollierten Stößen erzeugt, die auf den anderen Sitz wirken, wobei zu vorherigen Stößen die Änderungen des Öffnungsdruckes des Überdruckventils jeweils ermittelt wird und die Pulsenergie nachfolgender Stöße basierend auf der ermittelten Änderung des Öffnungsdruckes des Überdruckventils bemessen wird und die Position des anderen Sitzes solange in Richtung des einen festen Sitzes verschoben, bis mittels der Federvorspannung der gewünschte Öffnungsdruck eingestellt ist. Ferner betrifft die Erfindung eine Vorrichtung zum Ausführen des erfindungsgemäßen Verfahrens.

## Beschreibung

Die Erfindung betrifft ein Verfahren zum Einstellen einer Federvorspannung an einem Überdruckventil, welches eine Druckfeder zum Einstellen des Öffnungsdrucks, einen Ventilsitz und einen Federsitz aufweist, welche in einem Gehäuse angeordnet sind. Hierbei wird einer der beiden Sitze, das heißt der Ventilsitz oder der Federsitz fest in dem Gehäuse angeordnet. Mittels der Position des anderen Sitzes wird die Federspannung eingestellt.

Bei dem Gehäuse muss es sich nicht zwingend um ein dezidiertes Gehäuse handeln. Häufig ist ein Überdruckventil keine separate abgeschlossene Baugruppe, sondern die einzelnen Komponenten des Überdruckventils sind in einer größeren Funktionsbaugruppe verbaut, so dass es kein eigenes Gehäuse gibt. Beispielsweise sind solche Überdruckventile oft in einer Bohrung im Gehäuse von Hochdruckpumpen verbaut.

Ferner betrifft die Erfindung eine Vorrichtung zum Einstellen einer Federvorspannung an einem Überdruckventil mit einer Aufnahme zum Aufnehmen eines Überdruckventils und einem Stoßgenerator zum Beaufschlagen des Ventil- oder des Federsitzes des Überdruckventils mit kontrollierten Stößen.

Überdruckventile, die auch als Sicherheitsventile bezeichnet werden, dienen zum Schutz von druckbeaufschlagten Räumen, Druckbehältnissen oder beispielsweise Leitungen vor einem für das jeweilige Drucksystem unzulässigen Überdruck. Beim Überschreiten des Öffnungsdrucks kann das in dem entsprechenden Drucksystem befindliche Fluid über das geöffnete Überdruckventil entweichen.

Wesentlich ist hierbei, das Überdruckventil entsprechend genau einzustellen, damit es nicht zu einem unerwünschten Austritt des Fluides kommt, wenn beispielsweise der Öffnungsdruck zu gering eingestellt ist. Ebenfalls ist es wichtig, dass der Öffnungsdruck nicht zu hoch eingestellt ist, da in diesem Fall das zugrundeliegende Drucksystem durch einen Druckanstieg, der nicht ausgeglichen wird, beschädigt werden kann.

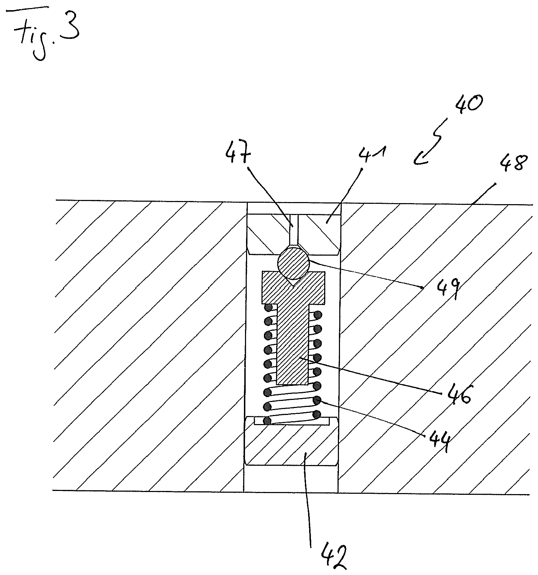

Im Folgenden wird exemplarisch ein vereinfachter Aufbau eines Überdruckventils 40 unter Bezugnahme auf Figur 3 sowie dessen Funktionsweise beschrieben.

In dieser Skizze weist das Überdruckventil 40 einen Ventilsitz 41 sowie einen Federsitz 42 auf. Diese Sitze 41, 42 sind in einem gemeinsamen Gehäuse 48 angeordnet. Zwischen dem Ventilsitz 41 und dem Federsitz 42 ist eine Druckfeder 44 mit ihrer Führung 46 vorgesehen. Der Ventilsitz 41 weist eine Bohrung 47 auf. An dessen der Feder zugewandten Ende ist eine Ventilkugel 49 angeordnet. Grundsätzlich können auch anderer Ventilsitze wie beispielsweise ein Flachsitz oder ein Kegelsitz verwendet werden.

Grundsätzlich gibt es im Wesentlichen zwei verschiedene Ausführungsformen des hier gezeigten Überdruckventils 40 beziehungsweise Arten, wie diese justiert werden.

Zunächst wird beziehungsweise ist einer der beiden Sitze 41, 42, das heißt entweder der Federsitz 42 oder der Ventilsitz 41 fest in dem Gehäuse 48 angeordnet. Dies kann beispielsweise durch Verpressen erfolgen. Es ist ebenfalls beispielweise für den Federsitz 42, möglich, diesen lediglich als Grund eine Bohrung in dem Gehäuse auszuführen. In der hier dargestellten Skizze sind beide Möglichkeiten angedeutet.

Zum Einstellen des Federdrucks, der den Öffnungsdruck bestimmt, wird der nicht fest mit dem Gehäuse verbundene Sitz in Richtung des fest mit dem Gehäuse verbundenen Sitzes verschoben. Ist beispielsweise der Federsitz 42 als Bohrungsgrund in dem Gehäuse 48 ausgeführt, wird der Ventilsitz 41 in Richtung des Federsitzes 42 geschoben. Hierdurch wird die Federspannung der Druckfeder 44 erhöht, so dass die Ventilkugel 49 mit einer höheren Kraft gegen die Bohrung 47, welche im Ventilsitz 41 vorgesehen ist, gedrückt wird. So wird der Öffnungsdruck des Überdruckventils 40 eingestellt.

Wie bereits erläutert, kann dies auch invers ausgeführt werden, sofern der Ventilsitz 41 fest mit dem Gehäuse verbunden ist beziehungsweise mit diesem verpresst wurde. Dann wird der Federsitz 42 in Richtung des Ventilsitzes 41 geschoben.

Die vorliegende Erfindung betrifft insbesondere ein derartiges Überdruckventil, bei dem mittels der Federvorspannung einer Druckfeder der Öffnungsdruck eingestellt werden kann.

Der Erfindung liegt die **Aufgabe** zugrunde, ein Verfahren und eine Vorrichtung anzugeben, mit welchen das Einstellen der Federvorspannung an einem Überdruckventil effizient möglich ist.

Diese Aufgabe wird erfindungsgemäß durch ein Verfahren mit den Merkmalen des Anspruchs 1 sowie einer Vorrichtung mit den Merkmalen des Anspruch 12 gelöst.

Vorteilhafte Ausführungsformen der Erfindung sind in den Unteransprüchen, in der Beschreibung sowie in den Figuren und deren Erläuterung angegeben.

Entsprechend der Erfindung ist vorgesehen, dass die Position des jeweils anderen Sitzes, als des nicht fest im Gehäuse angeordneten, mittels einer Presspassung eingestellt wird. Hierbei wird die Presspassung durch Aufbringen eines Kraftverlaufes hergestellt, welcher in Richtung des einen festen Sitzes gerichtet ist. Der Kraftverlauf wird zumindest anteilsweise durch eine Vielzahl von kontrollierten, insbesondere automatisierten, Stößen, die auf den jeweils anderen Sitz wirken, erzeugt. Ferner wird eine Überwachung des Öffnungsdrucks des Überdruckventils durchgeführt und die Position des anderen Sitzes solange in Richtung des einen festen Sitzes verschoben, bis mittels der Federvorspannung der gewünschte Öffnungsdruck eingestellt ist. Hierbei wird zu vorherigen Stößen die Änderungen des Öffnungsdruckes des Überdruckventils jeweils ermittelt und die Pulsenergie nachfolgender Stöße basierend auf der ermittelten Änderung des Öffnungsdruckes des Überdruckventils bemessen. Alternativ oder zusätzlich kann die Pulsenergie der Stöße von einem geringeren Wert solange gesteigert werden, bis der andere Sitz einen Vorschub im Gehäuse hat.

Der Erfindung liegt die Erkenntnis zugrunde, dass eine genaue Einstellung der Federvorspannung für ein Überdruckventil am besten dadurch erfolgen kann, dass als Regel- beziehungsweise Steuergröße beim Einstellen der Federvorspannung nicht der Vorschub einer der beiden Sitze beziehungsweise der Abstand zwischen den beiden Sitzen verwendet wird, sondern der Öffnungsdruck selbst. Auf diese Weise können unter Umständen bauteil- beziehungsweise komponentenbedingte Unterschiede und Abweichungen innerhalb einer Charge einfach ausgeglichen werden, da jedes Überdruckventil kalibriert und eingestellt wird, so dass exakt der Öffnungsdruck vorliegt, der gewünscht ist.

Dies wird entsprechend der Erfindung dadurch erreicht, dass einer der beiden vorhandenen Sitze fest in dem Gehäuse angeordnet wird. Dies kann beispielsweise durch ein Verpressen aber auch konstruktionsbedingt durch eine Bohrung erfolgen. Anschließend wird der andere Sitz durch das erfindungsgemäße Verfahren solange in dem Gehäuse in Richtung des einen festen Sitzes bewegt, bis die Federspannung entsprechend groß ist, so dass der gewünschte Öffnungsdruck vorliegt.

Dies kann in effizienter Weise dadurch erfolgen, dass entsprechend der Erfindung ein Kraftverlauf auf dem anderen Sitz aufgebracht wird, der aus einer Vielzahl von kontrollierten, idealerweist automatisch generierten, Stößen erzeugt wird. Hierbei werden die Stöße, das heißt die Energiestöße oder -impulse derart bemessen, dass ein Vorschub des anderen Sitzes innerhalb des Gehäuses stattfindet. So kann schnell und effektiv der gewünschte Öffnungsdruck eingestellt werden.

Im Sinne der Erfindung ist zu berücksichtigen, dass der Vorschub kein ruckartiger und schneller Vorschub sein muss, sondern auch quasi kontinuierlich anliegen kann, so dass eine ausreichende Messzeit für einen veränderten Öffnungsdruck vorliegt.

Die Pulsenergie stellt im Prozess eine Variable dar, die gezielt variiert werden kann, um den gewünschten Vorschub bzw. Druckerhöhung zu erreichen. Dazu kann stets aus den vorhergehenden Pulsen der jeweilige Vorschub bzw. Druckerhöhung ermittelt und somit das Bauteil charakterisiert werden. Damit ist es möglich den Vorschub individuell anzupassen, um den gewünschten Vorschub bzw. die Druckerhöhung für die jeweilige Presspassung zu erreichen und das Bauteil damit zielgerichtet einzustellen.

Bevorzugterweise wird das Überdruckventil zum Einstellen der Federvorspannung an einem Fluidleitungssystem angeschlossen. In diesem Fluidleitungssystem kann ein Drucksensor angeordnet werden. Auf diese Weise kann das Überdruckventil während des Einstellens der Federvorspannung mit einem Fluid, bei dem es sich sowohl um ein Gas als auch um eine Flüssigkeit oder ein Gemisch hiervon handeln kann, beaufschlagt werden, so dass realistische Bedingungen vorliegen.

Über einen im Fluidleitungssystem vorhandenen Drucksensor kann der dort vorhandene Druck festgestellt werden, so dass eindeutig bestimmt werden kann, ab welchem Druck sich das Überdruckventil öffnet, da sich dann eine charakteristische Änderung des Drucks im Fluidleitungssystem einstellt.

Bevorzugt wird die Überwachung des Öffnungsdrucks mittels eines, insbesondere festen, Volumenstromes eines Fluides und der Überwachung einer Druckänderung des Fluides durchgeführt. Hierzu wird das Fluid mit einem zunächst konstanten festen Volumenfluss in das Fluidleitungssystem mit dem angeschlossenen Überdruckventil geleitet. Dann wird die Position des anderen Sitzes eingestellt, indem sie beispielsweise in Bezug auf den einen Sitz immer weiter verringert wird. So wird die Federvorspannung erhöht, wodurch sich der Öffnungsdruck des Ventils ebenfalls erhöht. Handelt es sich bei dem Fluid um ein Gas kann dieses auch von einem Druckreservoir über eine Drossel dem Ventil zugeführt werden, was zu einem abnehmenden Volumenstrom führt. Die ist dann beim Bestimmen des Öffnungsdruckes zu berücksichtigen.

Sobald die Federvorspannung derart groß ist, dass sich das Überdruckventil schließt, kann eine Druckänderung im Fluidleitungssystem festgestellt werden. Dasselbe gilt auch, wenn das Überdruckventil derart dimensioniert oder ausgelegt ist, dass auch Öffnungen von geringeren Graden möglich sind.

In einer alternativen Ausführungsform kann auch ein iterativer Ansatz verfolgt werden. Hierbei wechseln sind das Messen des Öffnungsdrucks mit dem Kalibrieren, also dem Einstellen der Position des anderen Sitzes ab. Anders ausgedrückt können sich Phasen in denen das Überdruckventil mit einem Fluid beaufschlagt wird mit Phase in denen die Position des anderen Sitzes verändert wird abwechseln.

Vorteilhaft ist es, wenn die Pulsenergie der Stöße in Abhängigkeit von dem gemessen Öffnungsdruck eingestellt wird. Hierdurch kann erreicht werden, dass, wenn der gewünschte Öffnungsdruck beinahe erreicht ist, die Pulsenergie verringert wird und so eine hochgenaue Einstellung möglich ist. Ebenso ist es möglich, sollte der gewünschte Öffnungsdruck noch weit entfernt sein, mit stärkeren Stößen mit einer höheren Pulsenergie, den anderen Sitz möglichst schnell voranzutreiben.

Der Kraftverlauf kann durch verschiedene Arten aufgebracht werden. Vorteilhaft ist es, wenn ein Stoßgenerator verwendet wird. Zusätzlich kann ein Kraftsensor vorgesehen sein, wobei dann der Stoßgenerator zum zumindest teilweisen Erzeugen des Kraftverlaufs in Abhängigkeit von Messwerten des Kraftsensors angesteuert wird. Durch diese Ausgestaltung ist eine zusätzliche Rückkopplungskette neben dem Öffnungsdruck vorhanden. Insbesondere unter Verwendung des Kraftsensors und der durch ihn ermittelten Werte kann dafür gesorgt werden, dass ein mehr oder weniger kontinuierlicher Vorschub an den anderen Sitz, also dem Sitz der mit Kraft beaufschlagt wird, vorhanden ist.

Grundsätzlich reicht ein Stoßgenerator zum Erzeugen des Kraftverlaufes aus. Effizienter kann der Kraftverlauf erzeugt werden, wenn zumindest ein Teil des Kraftverlaufes durch eine von einem Vorlastgenerator erzeugte Vorlast erzeugt wird. So kann der Stoßgenerator geringer und kleiner dimensioniert werden, da ein Großteil des Kraftverlaufes über den Vorlastgenerator, welcher eine konstante Vorlast erzeugt, aufgebracht wird.

Entsprechend des erfindungsgemäßen Verfahrens ist es möglich, dass sowohl der Ventilsitz als auch der Federsitz der feste Sitz ist, und der jeweils andere Sitz, also der Federsitz beziehungsweise der Ventilsitz in Richtung des festen Sitzes bewegt wird.

Ferner betrifft die Erfindung eine Vorrichtung zum Einstellen einer Federvorspannung an einem Überdruckventil. Diese ist dadurch weitergebildet, dass ein Stoßgenerator zum Beaufschlagen des Ventilsitzes oder des Federsitzes des Überdruckventils mit kontrollierten Stößen vorgesehen ist. Der Stoßgenerator ist dabei so eingerichtet, dass die Pulsenergie nachfolgender Stöße basierend auf einer ermittelten Änderung des Öffnungsdruckes des Überdruckventils vorherigen Stöße bemessen wird.

Auch kann die Pulsenergie der Stöße von geringen Werten solange gesteigert werden, bis zwischen den beiden Sitzen ein Vorschub relativ zueinander stattfindet.

Außerdem ist bevorzugt, wenn die erfindungsgemäße Vorrichtung zum Durchführen des erfindungsgemäßen Verfahrens eingerichtet und ausgelegt ist.

In einer Weiterentwicklung des erfindungsgemäßen Verfahrens und der erfindungsgemäßen Vorrichtung können größere Vorschübe über den Vorlastgenerator; beispielsweise durch eine servomotorische Keilverstellung realisiert werden.

Die Erfindung wird nachfolgend anhand eines schematischen Ausführungsbeispiels unter Bezugnahme auf die Figuren näher erläutert. Hierbei zeigen:
- Fig. 1: eine Schnittansicht der erfindungsgemäßen Vorrichtung zum Durchführen des erfindungsgemäßen Verfahrens;
- Fig. 2: eine Vergrößerung des Teilbereichs II aus Fig. 1; und
- Fig. 3: eine schematische Darstellung eines Überdruckventils.

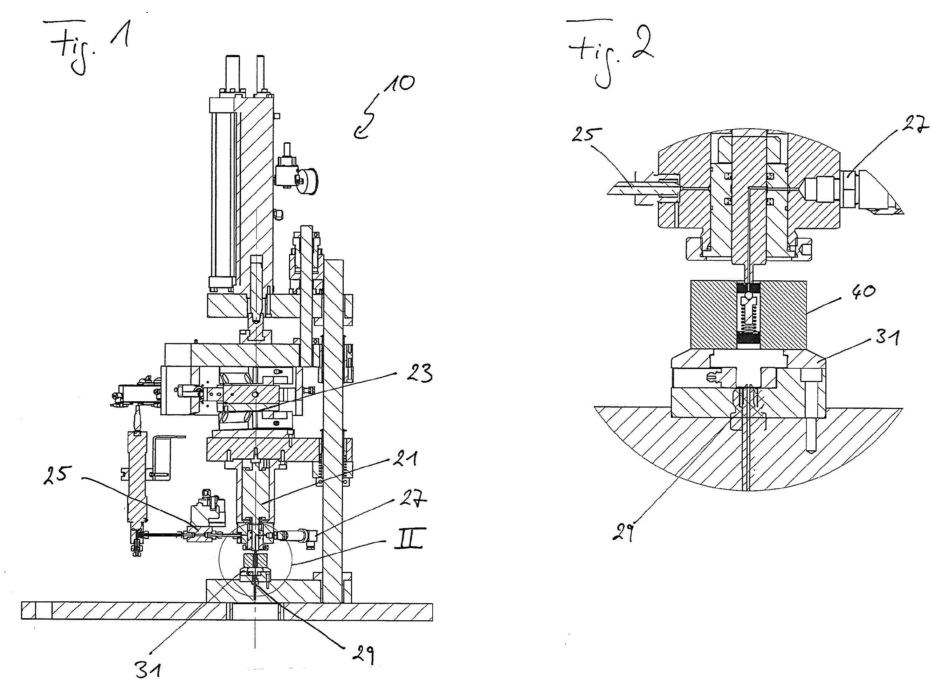

In Fig. 1 ist eine erfindungsgemäße Vorrichtung 10 dargestellt. In Fig. 2 wiederum ist der Bereich, welcher in Fig 1 mit II gekennzeichnet ist, noch einmal vergrößert gezeigt.

Die erfindungsgemäße Vorrichtung 10 weist eine Aufnahme 31 für ein Überdruckventil 40 auf. Dieses ist in den schematischen Zeichnungen analog, wie bereits in Bezug auf Fig. 3 beschrieben ausgeführt. Hier ist eine Kombination gezeigt, in der sowohl der Ventilsitz 41 als auch der Federsitz 42 verschiebbar sind. Bei einer realen Ausführung ist einer der beiden Sitze, wie bereits beschrieben, fest mit dem Gehäuse 48 verbunden.

Ist ein zu justierendes Überdruckventil 40 in die erfindungsgemäße Vorrichtung 10 eingesetzt, so wird das Überdruckventil 40, insbesondere dessen Ventilöffnung, mit einer Fluidzuführung 25 verbunden. Ferner ist ein Drucksensor 27 vorgesehen, mit dem der Druck in der Fluidzuführung 25 bestimmt werden kann.

Oberhalb der Fluidzuführung 25 ist ein Stoßgenerator 21 angeordnet, welcher zum zumindest teilweisen Erzeugen eines Kraftverlaufes verwendet werden kann, der zum Ändern der Position der beweglichen Sitzes 41, 42 im Gehäuse 48 dient. Dieser kann beispielsweise mittels Piezotechnik entsprechenden Stöße beziehungsweise Impulse erzeugen. Oberhalb des Stoßgenerators 21 ist zusätzlich ein Vorlastgenerator 23 vorgesehen, mit dem eine Grundlast auf den entsprechenden Sitz 41, 42 aufgebracht werden kann. Ferner ist an der Aufnahme 31 ein Kraftsensor 29 vorgesehen, welcher zur effektiven Ansteuerung des Stoßgenerators 21 und des Vorlastgenerators 23 verwendet werden kann.

Im Folgenden wird die Ausführung des erfinderischen Verfahrens näher erläutert.

Zunächst wird das zu justierende Überdruckventil 40 in der Aufnahme 31 angeordnet. Es wird mit der Fluidzuführung 25 verbunden. Nun wird an dem Überdruckventil 40 der Öffnungsdruck eingestellt werden, indem der Abstand zwischen dem Federsitz 42 und dem Ventilsitz 41 vermindert wird, so dass die Vorspannung der Druckfeder 44 erhöht wird. Um den Öffnungsdruck hochgenau einzustellen, wird entsprechend der Erfindung nicht der Abstand zwischen dem Ventilsitz 41 und dem Federsitz 42 als Regelgröße verwendet, sondern der Öffnungsdruck selbst. Hierzu wird über die Fluidzuleitung 25 ein Fluid mit einem festen Volumenfluss aufgeprägt. Beim Verwenden eines gasförmigen Fluides kann dieses auch von einem Druckreservoir über eine Drossel dem Überdruckventil 40 zugeführt werden. Dies kann zu einem abnehmenden Volumenstrom führen, was beim Messen des Öffnungsdruckes zu berücksichtigen ist. Der Druck durch die Fluidzuleitung 25 wird mittels des Drucksensors 27 aufgezeichnet.

Anschließend wird ein Kraftfluss auf den beweglichen Sitz 41, 42 mittels des Vorlastgenerators 23 und des Stoßgenerators 21 erzeugt. Der Vorlastgenerator 23 dient dazu, den mittels des Stoßgenerators 21 erzeugten Kraftverlauf möglichst gering zu halten, so dass lediglich die Kraftspitzen über den Stoßgenerator 21 erzeugt werden müssen. Hierbei werden die Stöße des Stoßgenerators 21 so bemessen, dass der bewegliche Sitz 41, 42 einen Vorschub aufweist. Zum Einstellen des Gesamtsystems können auch die Informationen des Kraftsensors 29 herangezogen werden.

Der Vorlastgenerator 23 kann beispielsweise als Hydraulikzylinder oder motorische Keilverstellung ausgeführt sein. Nun wird der bewegliche Sitz 41, 42 so lange in Richtung des festen Sitzes 41, 42 verschoben bis sich am Überdruckventil 40 der gewünschte Öffnungsdruck einstellt, da die Kraft der Federspannung der Druckfeder 44 der Kraft des Druckes in der Fluidzuleitung 25 entspricht. Das Öffnen bzw.

Schließen des Überdruckventils kann durch charakteristische Änderungen im Druck über den Drucksensor 27 erkannt werden.

Mittels des erfindungsgemäßen Verfahrens kann also eine hochgenaue Kalibrierung des Überdruckventiles durchgeführt werden, da direkt, basierend auf den Öffnungsdruck kalibriert wird und keine Hilfsgrößen, wie beispielsweise der Abstand zwischen dem Ventilsitz 41 und dem Federsitz 42, herangezogen werden.

Somit ist es mittels des erfindungsgemäßen Verfahrens und der erfindungsgemäßen Vorrichtung möglich, ein Überdruckventil einfach und effizient, jedoch hochgenau, zu kalibrieren und einzustellen.

## Patentansprüche

1. Verfahren zum Einstellen einer Federvorspannung an einem Überdruckventil (40), welches eine Druckfeder (44) zum Einstellen des Öffnungsdrucks des Überdruckventils (40), einen Ventilsitz (41) und einen Federsitz (42) aufweist, welche in einem Gehäuse (48) angeordnet sind,
wobei einer der beiden Sitze (41, 42) fest in dem Gehäuse (48) angeordnet wird, wobei mittels der Position des anderen Sitzes (41, 42) im Gehäuse (48) die Federvorspannung eingestellt wird,
**dadurch gekennzeichnet,**
**dass** die Position des anderen Sitzes (41, 42) mittels einer Presspassung eingestellt wird,
wobei die Presspassung durch Aufbringen eines Kraftverlaufs hergestellt wird, wobei der Kraftverlauf zumindest anteilsweise durch eine Vielzahl von kontrollierten Stößen erzeugt wird, die auf den anderen Sitz (41, 42) wirken,
**dass** eine Überwachung des Öffnungsdruckes des Überdruckventils (40) durchgeführt wird und die Position des anderen Sitzes (41, 42) solange in Richtung des einen festen Sitzes (41, 42) verschoben wird, bis mittels der Federvorspannung der gewünschte Öffnungsdruck eingestellt ist und
**dass** zu vorherigen Stößen die Änderungen des Öffnungsdruckes des Überdruckventils (40) jeweils ermittelt wird und die Pulsenergie nachfolgender Stöße basierend auf der ermittelten Änderung des Öffnungsdruckes des Überdruckventils (40) bemessen wird.

2. Verfahren nach Anspruch 1,
wobei das Überdruckventil (40) zum Einstellen der Federvorspannung an ein Fluidleitungssystem (25) angeschlossen wird.

3. Verfahren nach Anspruch 2,
**dadurch gekennzeichnet,**
**dass** in dem Fluidleitungssystem (25) ein Drucksensor (27) angeordnet wird.

4. Verfahren nach einem der Ansprüche 1 bis 3,
**dadurch gekennzeichnet,**
**dass** die Überwachung des Öffnungsdrucks mittels eines Volumenflusses eines Fluids und der Überwachung der Druckänderung in dem Fluid durchgeführt wird.

5. Verfahren nach einem der Ansprüche 1 bis 4,
**dadurch gekennzeichnet,**
**dass** das Überdruckventil (40) zum Einstellen der Federspannung mit einem Fluid beaufschlagt wird.

6. Verrühren nach einem der Ansprüche 1 bis 5,
**dadurch gekennzeichnet,**
**dass** die Pulsenergie der Stöße in Abhängigkeit des gemessenen Öffnungsdruckes eingestellt wird.

7. Verfahren nach einem der Ansprüche 1 bis 6,
**dadurch gekennzeichnet,**
**dass** der Kraftverlauf mittels eines Stoßgenerators (21) aufgebracht wird

8. Verfahren nach einem der Ansprüche 1 bis 7,
**dadurch gekennzeichnet,**
**dass** ein Kraftsensor (29) vorgesehen wird und
**dass** ein Stoßgenerator (21) zum zumindest anteilsweise erzeugen des Kraftverlauf in Abhängigkeit von Messwerten des Kraftsensors eingestellt wird.

9. Verfahren nach einem der Ansprüche 1 bis 8,
**dadurch gekennzeichnet,**
**dass** zumindest ein Teil des Kraftverlaufs durch eine von einem Vorlastgenerator (23) erzeugte Vorlast erzeugt wird.

10. Verfahren nach einem der Ansprüche 1 bis 9,
**dadurch gekennzeichnet,**
**dass** der eine Sitz (41, 42) der Ventilsitz (41) und der andere Sitz der Federsitz (42) ist.

11. Verfahren nach einem der Ansprüche 1 bis 9,
**dadurch gekennzeichnet,**
**dass** der eine Sitz (41, 42) der Federsitz (42) und der andere Sitz der Ventilsitz (41) ist.

12. Vorrichtung (10) zum Einstellen einer Federvorspannung an einem Überdruckventil (40) mit
einer Aufnahme zum Aufnehmen eines Überdruckventils
**dadurch gekennzeichnet,**
**dass** ein Stoßgenerator (23) zum Beaufschlagen des Ventilsitzes (41) oder des Federsitzes (42) des Überdruckventils (40) mit kontrollierten Stößen vorgesehen ist,
**dass** der Stoßgenerator (23) eingerichtet ist, die Pulsenergie nachfolgender Stöße basierend auf einer ermittelten Änderung des Öffnungsdruckes des Überdruckventils (40) vorherigen Stöße zu bemessen.

13. Vorrichtung (10) nach Anspruch 12,
**dadurch gekennzeichnet,**
**dass** die Vorrichtung (10) zum Durchführen des Verfahrens nach einem der Ansprüche 1 bis 11 eingerichtet ist.
